# EUROPEAN PATENT APPLICATION

(11) **EP 0 529 863 A2**
(43) Date of publication of application: **03.03.1993**
(21) Application number: 92307319.1
(22) Date of filing: 11.08.1992
(51) Int. Cl.: G01N 35/06, B01L 3/02, G05D 7/00, G05D 25/02, G01P 13/00, G01F 25/00

(54) **Apparatus for automatically regulating the monitoring of the suction of a sample**

(30) Priority: 26.08.1991 JP 75145/91 U
(71) Applicant: TOA MEDICAL ELECTRONICS CO., LTD., Chuoku, Kobe (JP)
(72) Inventor: Kio, Katsuhiko, Sumaku, Kobe (JP)
(74) Representative: Price, Paul Anthony King

(57) **Abstract**

In an automatic analyzer such as a blood analyzer, it is important to observe whether or not the sample (such as a blood sample) is sucked up correctly. The apparatus of the invention comprises a sample suction tube (14), a light emitting element (10), a driving circuit (16) for driving the light emitting element (10), a photosensor (12) for receiving light from the light emitting element (10) via the sample suction tube (14), a judging circuit (20) for judging that a sample is in the sample suction tube (14) on the basis of an output (Vp) from the photosensor (12), and a controller (22) for automatically regulating the driving of the light emitting element (10), before sample suction, so that the output (Vp) of the photosensor (12) is substantially the same as a reference value (Vr), and for holding the driving of the light emitting element (10) during sample suction. Thus, the sensitivity adjustment of the apparatus is automated (e.g. when the sample suction tube is changed over), and the monitoring capability of the apparatus is enhanced.

## Description

The invention relates to apparatus for automatically regulating the monitoring of the suction (aspiration) of a sample (liquid specimen) in an automatic analyzer such as a blood analyzer.

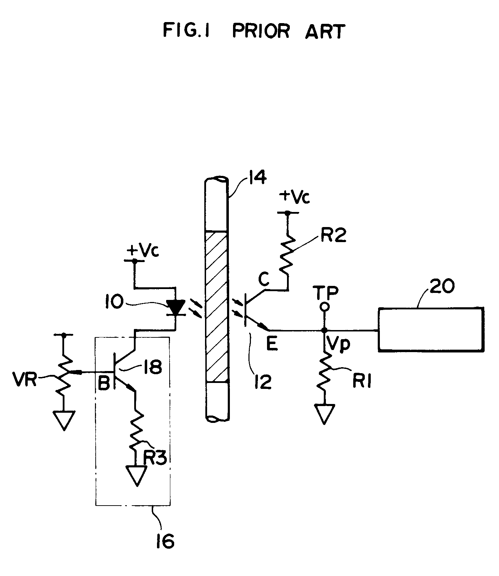

Fig. 1 shows a known apparatus for observing whether or not the sample such as blood has been sucked correctly. A tube 14 is used to suck (aspirate) a sample and is made of a synthetic resin of high transparency. A light emitting element 10 (such as an LED) and a photosensor 12 (such as a phototransistor) are disposed on opposite sides of the sample suction tube 14. A constant current circuit 16 comprises a transistor 18 and a resistor R3 and is connected to the light emitting element 10. A variable resistor VR is connected to the base B of the transistor 18, and the value of the current flowing in the light emitting element 10 is varied by adjusting the variable resistor VR.

Resistors R2, R1 are connected to the collector C and emitter E of the photosensor 12, and the current corresponding to the quantity of light falling on the photosensor 12 is converted into a voltage Vp. The resistance R2 is not necessarily required. To the output of the photosensor 12 is connected a judging circuit 20 for judging whether the sample suction is normal or abnormal, depending on the change of the quantity of light transmitted through the tube 14 at the time of the sample suction.

Initially, the sample suction tube 14 is entirely filled up with a cleaning solution, and air is present at the front end of the tube. The portion of the sample suction tube 14 where the light emitting element 10 and photosensor 12 are disposed is of high transparency. Thus light passes easily through the tube 14, and the voltage Vp at test point TP is high. During sample suction, when the blood reaches the observation area, the light is blocked by the blood corpuscle components, and the detected voltage Vp drops in value. A comparator (not shown) in the judging circuit 20 uses the detected voltage Vp to produce a binary output indicating whether the blood is or is not being sucked (aspirated). On the basis of the binary output, it is further judged whether the suction is normal or not. When the suction of the sample is over, cleaning solution is poured into the tube, and the residue of the blood sample is washed away.

In this apparatus, various variations occur (for example, variations of circuit components such as the light emitting element and the photosensor, and variations of the diameter and transparency of the tube). In order to maintain a high detection capability by compensating for such variations, it is possible to adjust the current of the light emitting element 10 by using the variable resistor VR. The adjustment is such that the detection voltage Vp at the test point TP is a specified value for specific conditions of the state of the sample suction tube 14 (for example, when the tube contains a clear liquid).

The existing apparatus had the following problems.
(1) Every time the tube is exchanged, the current of the light emitting element must be adjusted by using the variable resistor to compensate for any variation in the tube diameter and transparency. This compensation operation is complicated.
(2) The characteristics of circuit components vary with the passing of time and changes in the temperature, and the detection sensitivity is lowered.
(3) The detection sensitivity is also lowered by any contamination of or damage to the tube.
(4) In the case of a thin tube, a slight deviation in the position of the tube, or movement of the light emitting element or photosensor, may lead to a lowering of the detection sensitivity.

According to the present invention, there is provided apparatus for automatically regulating the monitoring of the suction of a sample, comprising: a sample suction tube, a light emitting element, a driving circuit for driving the light emitting element, a photosensor for receiving light from the light emitting element via the sample suction tube, and a judging circuit for judging that a sample is in the sample suction tube on the basis of an output from the photosensor, wherein the apparatus further comprises: control means for automatically regulating the driving of the light emitting element, before sample suction, so that the output of the photosensor is substantially the same as a reference value, and for holding the driving of the light emitting element during sample suction.

The apparatus of the invention is capable of always maintaining a favourable detection sensitivity by means of automatic regulation.

When the sample is sucked into the sample suction tube and the judging means judges whether or not a sample has been sucked, the control means holds the driving of the light emitting element in the correct state for making the judgement, because the automatic regulation has been performed before sample suction.

The invention will now be described by way of non-limiting embodiments with reference to the accompanying drawings, in which:-
Fig. 1 is a schematic structural diagram showing an example of conventional apparatus for monitoring the suction of a sample;
Fig. 2 is a schematic structural diagram showing an embodiment in accordance with the invention of apparatus for automatically regulating the monitoring of the suction of a sample;
Fig. 3 is a schematic structural diagram showing an embodiment of the control means of the apparatus of Fig. 2; and
Fig. 4 is a schematic structural diagram showing a second embodiment of the control means of the apparatus of Fig. 2.

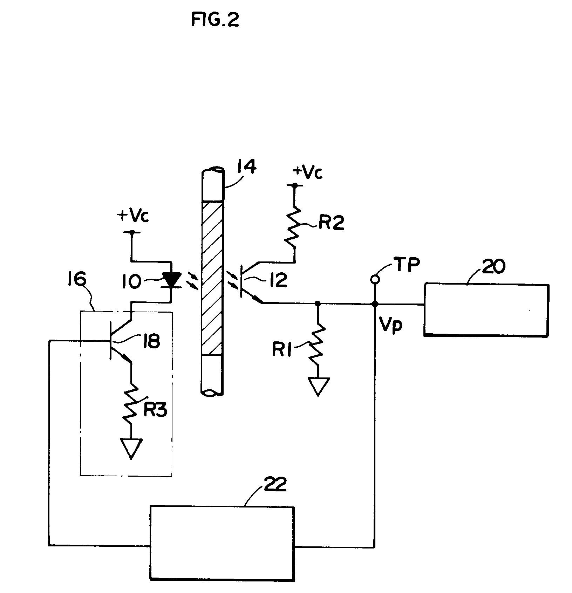

The invention presents, as shown in Fig. 2, an apparatus for observing suction of sample having function of automatic regulation comprising a sample suction tube 14, a luminous element 10 driven by a driving circuit 16 for emitting light toward the sample suction tube 14, a photo sensor 12 for receiving the light from the sample suction tube 14, and a judging circuit 20 for judging the suction of sample on the basis of the signal from the photo sensor 12, wherein
control means 22 is further disposed to drive the luminous element 10 so that the output Vp of the photo sensor 12 may be nearly the reference (standard) value Vr before suction of sample, and to drive the luminous element 10 to hold the driving state when sucking the sample.

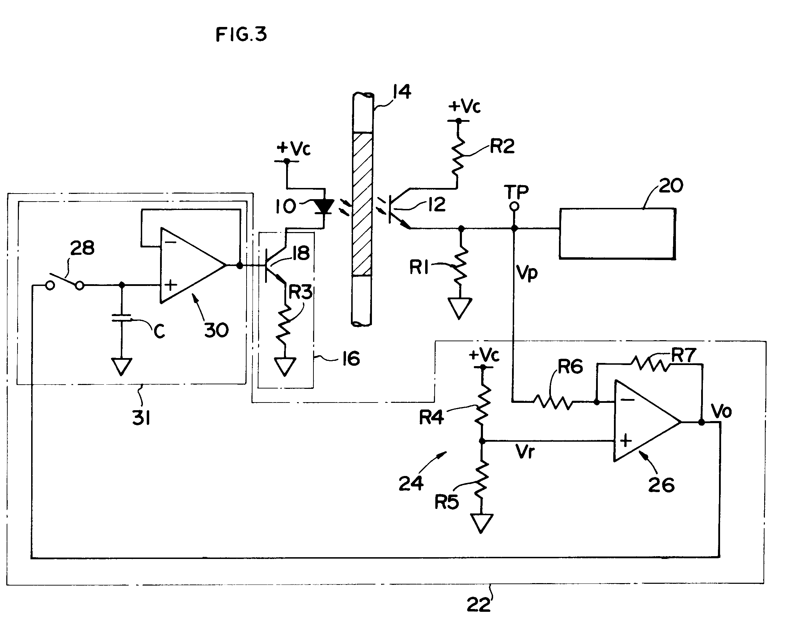

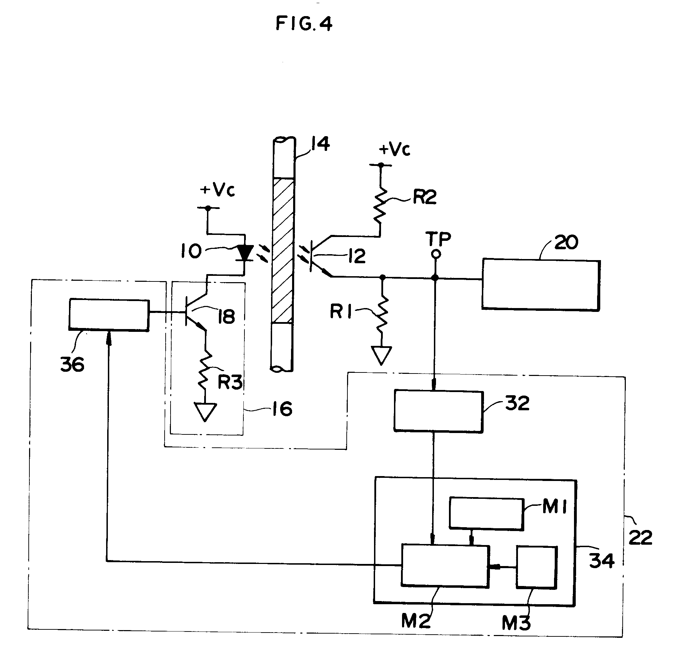

In this case, as shown in Fig. 3, the control means 22 comprises means 24 for generating reference value Vr,
an amplifying circuit 26 for receiving the output of the photo sensor 12 in one input part and receiving the reference voltage Vr in the other input part, and amplifying the difference of the two, and
a sample hold circuit 31 composed of switch means 28 having one end connected to the output of the amplifying circuit 26 to be turned on before suction of sample and turned off at the time of suction of sample, a capacitor C connected to the other end of the switch means 28, and a buffer circuit 30 having the other end of the switch means 28 and capacitor C connected to the input part, and the driving circuit 16 of the luminous element 10 connected to the output part.
Also the control means 22 comprises, as shown in Fig. 4, an A/D conversion circuit 32 connected to the output of the photo sensor 12,
data processing means 34 connected to the A/D conversion circuit 32, and
a D/A conversion circuit 36 connected between the data processing means 34 and driving circuit 16, in which

the data processing means 34 comprises means M1 for setting reference value,
means M2 for calculating the value corresponding to the difference between the output value of the photo sensor 12 and the reference value, and
holding means M3 for operating the above calculation before suction of sample to supply the data into the D/A conversion circuit 36, and prohibiting the calculation at the time of suction of sample to hold the data before suction of sample to supply into the D/A conversion circuit 36.

When the sample is sucked (aspirated) into the sample suction tube 14, light is emitted from the luminous element 10 toward the sample suction tube 14, and the quantity of light entering the photo sensor 12 by passing through the sample suction tube 14 varies, and this change is detected by the photo sensor 12, and it is judged whether the sample is sucked or not, and whether the suction of sample is normal or not in the judging circuit 20. At this time, the control means 22 drives the luminous element 10 so that the output Vp of the photo sensor 12 may be nearly the reference value Vr before sample suction, and drives the luminous element 10 so as to hold the driving state during sample suction.

### Embodiment 1

In Fig. 2, numeral 16 is a constant current driving circuit for driving the luminous element 10 at a specified current. In this embodiment, omitting the variable resistor VR in Fig. 1, there is control means 22 for automatically setting the current value of the constant current driving circuit 16 at a specified value depending on the output voltage Vp of the photo sensor 12. Numeral 14 denotes a sample suction (aspiration) tube, 18 is a transistor, and 20 is a judging circuit.

The control means 22 drives the constant current driving circuit 16 for radiating the luminous element 10 so that the output Vp of the photo sensor 12 may be close to the reference value Vr in the state before suction of sample, and drives the constant current driving circuit 16 so as to maintain the luminous state during sample suction.

### Embodiment 2

In this embodiment, as shown in Fig. 3, an analog circuit is used as the control means 22.

Numeral 24 is means for generating reference value Vr, by dividing the supply voltage Vc by using resistances R4, R5.

It may be also generated by other constant voltage circuit. Numeral 26 is a differential amplifying circuit for amplifying the difference of the reference value Vr and output Vp of the photo sensor 12. The output Vp of the photo sensor 12 is entered in an inverting input terminal (-) of the amplifying circuit 26, and the reference voltage Vr is entered is a non-inverting input terminal (+), and the difference of the two is amplified. One end of switch means 28 is connected to the output of the amplifying circuit 26. A capacitor C for accumulating charge is connected to the other end of the switch means 28. The other end of the capacitor C is connected to the ground. The capacitor C is further connected with a buffer circuit 30 of high input impedance. A sample hold circuit 31 is composed of the switch means 28, capacitor C and buffer circuit 30. It is the sample state when the switch means 28 is ON, and hold state when it is OFF.

Before suction of sample, the inside of the sample suction tube 14 in the observing region is filled with a cleaning solution. In this state, the apparatus is controlled automatically. Before suction of sample, the switch means 28 is turned on, and when sucking the sample, the switch means 28 is turned off. On/off switching of the switch means 28 is controlled from outside.

Next is explain the operation of the circuit. The output Vo of the amplifying circuit 26 is expressed in the following formula.$\text{Vo = Vr - (Vp - Vr) * R7/R6}$

However, the output Vo is in a range of 0 to Vc*R1/(R1+R2). Here Vo is supposed to be 12[V], and the reference value Vr about 9[V]. The resistance R7 has a larger value than R6. For example, R6 = 1[kohm], R7 = 100[kohms].

Suppose the switch means 28 is OFF, with no charge accumulated in the capacitor C and no current flowing in the luminous element 10, thereby not emitting light. In this state, the output Vp of the photo sensor 12 is almost 0[V]. When the switch means 28 is turned on, the output Vo becomes the upper limit value as known from the formula above, and the output of the buffer circuit 30 climbs up. As the base potential of the transistor 18 in the constant current driving circuit 16 goes up, the current in the luminous element 10 increases to increase the quantity of light emitted, and the output voltage Vp of the photo sensor 12 elevates. If, however, the output Vp rises too high, the output Vo descreases, the base potential declines, the current decreases, the quantity of light emitted also decreases, and the output Vp drops. That is, the output Vp acts to, from a certain boundary point, rise if descending, and drop if ascending, thereby maintaining a certain stable value. Since the resistance R7 has a larger value than R6 as mentioned above, the output Vo changes largely if the output Vp changes slightly near the reference value Vr, so that the output Vp is stabilized at a value close to the reference value Vr. That is, the sensitivity is adjusted.

When the switch means 28 is turned off, the luminous element 10 emits light in a specific quantity regardless of the value of the output Vp by the function of the capacitor C. When the sample is sucked, a specified voltage is produced from the photo sensor 12 depending on the state of the portion being observed. Depending on the voltage it is judged whether suction is normal or not in the judging circuit 20. Incidentally, if the response of the control means 22 is too fast, the output Vp oscillates, and therefore it is necessary to delay the response. The capacitor C also plays this role, but other capacitor may be connected parallel to the resistance R7 of the amplifying circuit 26. Usually, the output of the control means 22 is in a certain specific range, and if out of the range, it means occurrence of some abnormality (such as damage to the tube), and it is further desired to observe the output continuously.

The other constitution and action are same as in Embodiment 1.

### Embodiment 3

As shown in Fig. 4, a digital circuit is used as the control means 22 in this embodiment.

The control means 22 comprises an A/D conversion circuit 32 connected to the output of the photo sensor 12, data processing means 34 such as microcomputer connected to the A/D conversion circuit 32, and a D/A conversion circuit 36 connected between the data processing means 34 and driving circuit 16. In the data processing means 34, M1 is reference value setting means (for example, memory means) for setting the reference value data (the value corresponding to the reference voltage Vr in Fig. 3), M2 is calculating means for calculating the value corresponding to the difference between the output value data of the photo sensor 12 and the reference value data, and M3 is holding means for causing the calculating means M2 to calculate as stated above before suction of sample to make the output data of the photo sensor 12 equal to the reference value data on the basis of the result of calculation, and for prohibiting the operation by the calculating means M2 to hold the value before sample suction during sample suction.

The other constitution and action are same as in Embodiment 1.

Being thus composed, the invention brings about the following effect.

(1) Sensitivity adjustment of an apparatus for observing suction of sample may be automated in a simple constitution, and various fluctuations of the apparatus may be absorbed to adjust to specified values. Whence, the labor of adjustment is saved, the observing capability of the apparatus is enhanced, and moreover the detection sensitivity is not lowered due to passing of the time or change of temperature or the like.

Having described preferred embodiments of the invention with reference to the accompanying drawings, it is to be understood that the invention is not limited to those precise embodiments, and that various changes and modifications may be effected therein by one skilled in the art without departing from the scope of the invention.

## Claims

1. Apparatus for automatically regulating the monitoring of the suction of a sample, comprising:
a sample suction tube (14), a light emitting element (10), a driving circuit (16) for driving the light emitting element (10), a photosensor (12) for receiving light from the light emitting element (10) via the sample suction tube (14), and a judging circuit (20) for judging that a sample is in the sample suction tube (14) on the basis of an output (Vp) from the photosensor (12), wherein the apparatus further comprises:
control means (22) for automatically regulating the driving of the light emitting element (10), before sample suction, so that the output (Vp) of the photosensor (12) is substantially the same as a reference value (Vr), and for holding the driving of the light emitting element (10) during sample suction.

2. Apparatus according to claim 1, wherein the control means (22) comprises:
means (24) for generating the reference value (Vr);
an amplifying circuit (26) for receiving the output of the photosensor (12) as one input and the reference voltage (Vr) as another input, and for amplifying the difference between the two inputs to produce an output, and
a holding circuit (31) comprising switching means (28) having one end connected to the output of the amplifying circuit (26) and arranged to be turned on before sample suction and turned off during sample suction, a capacitor (C) connected to the other end of the switch means (28), and a buffer circuit (30) having the other end of the switch means (28) and the capacitor (C) connected as an input, and the driving circuit (16) connected as an output.

3. Apparatus according to claim 1, wherein the control means (22) comprises:
an A/D conversion circuit (32) connected to the output of the photosensor (12);
data processing means (34) connected to the A/D conversion circuit (32); and
a D/A conversion circuit (36) connected between the data processing means (34) and the driving circuit (16);
the data processing means (34) comprising:
means (M1) for setting a reference value;
means (M2) for calculating a value corresponding to the difference between the output value of the A/D conversion circuit (32) and the reference value; and
holding means (M3) arranged, before sample suction, to permit the calculation means (M2) to calculate the difference value and to supply the difference value to the D/A conversion circuit (36), and arranged, during sample suction, to prohibit the operation of the calculation means (M2) and to continue to supply to the D/A conversion circuit (36) the difference value supplied before sample suction.
